# EUROPÄISCHE PATENTANMELDUNG

(11) **EP 2 525 166 A1**
(43) Veröffentlichungstag der Anmeldung: **21.11.2012**
(21) Anmeldenummer: 12164875.2
(22) Anmeldetag: 20.04.2012
(51) Int. Cl.: F24J 2/52

(54) **Solarmodulanordnung mit Haltenut und zugeordnetem Füllteil**

(30) Priorität: 20.05.2011 DE 102011102239
(71) Anmelder: ROBERT BOSCH GMBH, 70442 Stuttgart (DE)
(72) Erfinder: Kaiser, Uwe, 71336 Waiblingen (DE); Ludwig, Peter, 72072 Tuebingen (DE); Ulmer, Peter, 73660 Urbach (DE); Geist, Martin, 74226 Nordheim (DE)
(74) Vertreter: Maiß, Harald

(57) **Zusammenfassung**

Die Erfindung betrifft eine Solarmodulanordnung (10) mit wenigstens einem ebenen, rechteckigen Solarmodul (20), dem zwei Tragprofile (30) zugeordnet sind, welche sich mit einer konstanten Querschnittsform parallel zu zwei gegenüberliegenden Seiten des Solarmoduls (20) erstrecken, wobei die Tragprofile (30) aufeinander zu weisende Haltenuten (40; 50) mit einem Nutgrund (42; 52) und zwei gegenüberliegenden Nutflanken aufweisen, welche das Solarmodul (20) an einem zugeordneten Seitenrand halten, wobei der Abstand der Nutgründe (42; 52) der einander zugeordneten Haltenuten (40; 50) größer als die Breite des Solarmoduls (20) ist, wobei die einander zugeordneten Nutflanken jeweils einen Freiraum zwischen den beiden Tragprofilen (30) definieren, dessen Breite kleiner als die Breite des Solarmoduls (20) ist. Erfindungsgemäß ist ein gesondertes Füllteil (60) vorgesehen, welches mit einem Füllabschnitt (64) zwischen dem Solarmodul (20) und dem Nutgrund (42) angeordnet ist, wobei die Breite (65) des Füllabschnitts (64) so groß ausgeführt ist, dass das Solarmodul (20) im Wesentlichen spielfrei zwischen dem Füllteil (60) und dem Nutgrund (52) aufgenommen ist.

## Beschreibung

Die Erfindung betrifft eine Solarmodulanordnung gemäß dem Oberbegriff von Anspruch 1.

Aus der DE 20 2007 008 659 U1 ist eine Solarmodulanordnung bekannt. Gemäß der Fig. 3 der DE 20 2007 008 659 U1 umfasst die Solarmodulanordnung ein ebenes, rechteckiges Solarmodul 9, welches mit einem Kantenschutz 1 versehen ist. Im Rahmen der vorliegenden Anmeldung wird der Kantenschutz als Bestandteil des Solarmoduls angesehen. Bei dem Solarmodul handelt es sich vorzugsweise um ein fotoelektrisches Solarmodul, wobei die vorliegende Erfindung auch für thermische Solarmodule anwendbar ist. Bei dem Solarmodul handelt es sich vorzugsweise um eine rahmenlose Ausführung, die im Wesentlichen in Form einer Verbundglasplatte ausgeführt ist.

Weiter sind zwei Tragprofile 8 vorgesehen, die sich mit einer konstanten Querschnittsform parallel zu zwei gegenüberliegenden Seiten des Solarmoduls erstrecken. Die Tragprofile sind aus Aluminium im Strangpressverfahren hergestellt, wobei sie aufeinander zu weisende Haltenuten 12; 13 aufweisen, welche das Solarmodul an einem zugeordneten Seitenrand halten. Die Haltenuten weisen dabei einen ebenen Nutgrund und ebene, parallel gegenüberliegende Nutflanken auf.

Damit das Solarmodul in die mit festem Abstand vormontierten Tragprofile eingesetzt werden kann, ist der Abstand der Nutgründe größer als die Breite des Solarmoduls. Bei der Montage wird das Solarmodul zuerst in die tiefere Haltenut vollständig eingeschoben. In der Folge kann es an der oberen Nutflanke des gegenüberliegenden Tragprofils vorbei in die dortige Haltenut eingeschwenkt werden. Anschließend wird das Solarmodul aus der tieferen Haltenut herausgezogen, bis es vollständig in der weniger tiefen Haltenut aufgenommen ist. In diesem Zustand wird es sicher von den beiden Tragprofilen gehalten, da der Freiraum, den zwei zugeordnete Nutflanken zwischen den Tragprofilen definieren, kleiner als die Breite des Solarmoduls ist.

Der Nachteil der bekannten Solarmodulanordnung besteht darin, dass sich die Solarmodule in den Haltenuten verschieben können. Die Solarmodulanordnung ist daher nur einsetzbar, wenn die Haltenuten quer zur Neigungsrichtung der Solarmodule im Wesentlichen horizontal verlaufen. Dann werden die Solarmodule durch ihr Eigengewicht in einer stabilen Lage gehalten.

Die Aufgabe der Erfindung besteht darin, das bekannte Montageprinzip für Solarmodulanordnungen nutzbar zu machen, bei denen die Haltenuten parallel zur Neigungsrichtung der Solarmodule verlaufen, wobei die Solarmodule dennoch im Wesentlichen spielfrei in den Haltenuten gehalten werden.

Gemäß dem selbständigen Anspruch wird diese Aufgabe dadurch gelöst, dass ein gesondertes Füllteil vorgesehen ist, welches mit einem Füllabschnitt zwischen dem Solarmodul und dem Nutgrund angeordnet ist, wobei die Breite des Füllabschnitts so groß ausgeführt ist, dass das Solarmodul im Wesentlichen spielfrei zwischen dem Füllteil und dem gegenüberliegenden Nutgrund aufgenommen ist. Das gesonderte Füllteil verhindert die Verschiebung der Solarmodule in der Haltenut. Es kann auch dann in die Haltenut eingebaut werden, wenn die Tragprofile mit einem festen Abstand montiert sind, wobei das Solarmodul bereits eingebaut ist. Hierfür wird der Füllabschnitt neben dem Solarmodul in die Haltenut eingesetzt und anschließend in Erstreckungsrichtung der Tragprofile in der Haltenut verschoben, so dass er in den Freiraum zwischen dem Solarmodul und dem Nutgrund des Tragprofils gelangt.

Der Füllabschnitt braucht sich dabei nicht über die gesamte Breite des Solarmoduls zu erstrecken. Eine Sicherung in einem Eckbereich des Solarmoduls reicht erfahrungsgemäß aus. Weiter reicht es aus, wenn das Füllteil nur an einer Seite des Solarmoduls vorgesehen ist. Es ist zwar denkbar, zwei Füllteile an den gegenüberliegenden Seiten des Solarmoduls einzubauen, ein besonderer Nutzen ergibt sich hieraus aber nicht. Gleichwohl wird auch für diese Ausführungsform Schutz begehrt.

In den abhängigen Ansprüchen sind vorteilhafte Weiterbildungen und Verbesserungen der Erfindung angegeben.

Der Füllabschnitt kann eine Einführschräge aufweisen, damit er leicht zwischen dem Seitenrand des Solarmoduls und dem Nutgrund der Haltenut eingeführt werden kann.

Das Füllteil kann im Wesentlichen L-förmig mit einem ersten und einem dazu senkrechten zweiten Schenkel ausgebildet sein, wobei der erste Schenkel den Füllabschnitt bildet, wobei der zweite Schenkel einen Anschlagabschnitt für das Solarmodul gegen Verschiebung in Erstreckungsrichtung des Tragprofils bildet. Wenn das Solarmodul von einer Haltenut gehalten wird, die in Neigungsrichtung des Solarmoduls verläuft, dann muss ein Anschlag vorgesehen sein, der verhindert, dass das Solarmodul aufgrund seines Eigengewichts in Erstreckungsrichtung des Tragprofils verrutscht. Das vorgeschlagene L-förmige Füllteil bildet gleichzeitig den erfindungsgemäßen Füllabschnitt und den ohnehin erforderlichen Anschlag. Der Zusatzaufwand für die erfindungsgemäße Lösung gegenüber bekannten Lösungen beschränkt sich damit in der Anpassung der Form des Anschlags. Die Mehrkosten sind folglich gering.

Es können wenigstens zwei Solarmodule vorgesehen sein, die von einem gemeinsamen Tragprofil gehalten werden, welches mit zwei voneinander weg weisenden Haltenuten versehen ist, wobei die Nutgründe der beiden Haltenuten an einer gemeinsamen Trennwand vorgesehen sind, wobei das Füllteil mit einem Klemmbolzen am Tragprofil befestigt ist, der die Trennwand und das Füllteil durchsetzt. Die vorgeschlagene Form des Tragprofils ist aus der bereits angesprochenen DE 20 2007 008 659 U1 bekannt. Die vorgeschlagene Befestigung des Füllteils an der Klemmwand ist besonders kostengünstig, da nur ein einziger Klemmbolzen erforderlich ist, um das Klemmteil sicher am Tragprofil zu befestigen. Dementsprechend muss in das vorzugsweise stranggepresste Tragprofil nur eine einzige Befestigungsbohrung pro Füllteil hergestellt werden.

Der Klemmbolzen kann zwei identische Füllteile durchsetzen, die zu beiden Seiten der Trennwand angeordnet sind. Damit werden mit einem Befestigungsdurchbruch und einem Klemmbolzen zwei Füllteile für zwei Solarmodule am zugeordneten Tragprofil befestigt. Die entsprechende Solarmodulanordnung ist folglich besonders kostengünstig.

Der Füllabschnitt eines der beiden Füllteile kann nicht in Eingriff mit dem Solarmodul stehen. Diese Ausführungsform wird bevorzugt dann angewandt, wenn an beiden Seiten des Solarmoduls ein Anschlag vorgesehen werden soll, wohingegen der erfindungsgemäße Füllabschnitt nur an einer Seite angeordnet werden soll. Mit der vorgeschlagenen Lösung können dennoch auf beiden Seiten des Solarmoduls die gleichen Füllteile verwendet werden. Diese können somit in großer Stückzahl und damit kostengünstig hergestellt werden.

Die Tiefe der beiden Haltenuten, welche ein Solarmodul tragen, kann sich um die Breite des Füllabschnitts des Füllteils unterscheiden. Damit ist die tragende Breite beider Haltenuten gleich groß. Die dort auftretenden Belastungen, die beispielsweise durch das Gewicht der Solarmodule und der daran angreifenden Windlasten verursacht werden, sind in der Folge gleich groß, so dass die Belastbarkeit des Werkstoffs der Tragprofile überall bestmöglich ausgenutzt wird. Für die Tragprofile wird damit besonders wenig Material benötigt.

Die Haltenut kann eine Einführschräge für das Solarmodul aufweisen, damit dieses besonders einfach in die Haltenut eingeführt werden kann.

Das Füllteil kann aus Kunststoff, vorzugsweise Polyamid, im Spritzgussverfahren hergestellt sein. Damit kann es besonders kostengünstig in großen Stückzahlen hergestellt werden.

Zwischen der Haltenut und dem Rand des Solarmoduls kann ein Gummiprofil vorgesehen sein, welches im Querschnitt betrachtet U-förmig ausgebildet ist. Durch das Gummiprofil kann das Solarmodul mit geringer Vorspannung in die zugeordnete Haltenut eingebaut werden, so dass es dort spielfrei gehalten ist auch wenn beispielsweise Windlasten auf dieses einwirken. Gleichzeitig werden durch das Gummiprofil Herstellungstoleranzen hinsichtlich der Dicke des vorzugsweise rahmenlosen Solarmoduls und der Breite der Haltenut ausgeglichen.

Die Erfindung wird im Folgenden anhand der beigefügten Zeichnungen näher erläutert. Es stellt dar:
- Fig. 1: eine perspektivische Ansicht einer erfindungsgemäßen Solarmodulanordnung;
- Fig. 2a: einen Querschnitt der Tragprofile mit dem Solarmodul in einem ersten Stadium des Monatagevorgangs;
- Fig. 2b: die Ansicht nach Fig. 2a im zweiten Stadium des Montagevorgangs;
- Fig. 2c: die Ansicht nach Fig. 2a im dritten Stadium des Montagevorgangs;
- Fig. 2d: die Ansicht nach Fig. 2a im vierten Stadium des Montagevorgangs;
- Fig. 3: eine Schnittansicht des Modulträgers mit eingesetztem Solarmodul und eingesetztem Füllteil, wobei die Schnittebene parallel zur Oberfläche des Solarmoduls verläuft; und
- Fig. 4: einen Querschnitt des Tragprofils, wobei die Schnittebene durch den Klemmbolzen vorläuft.

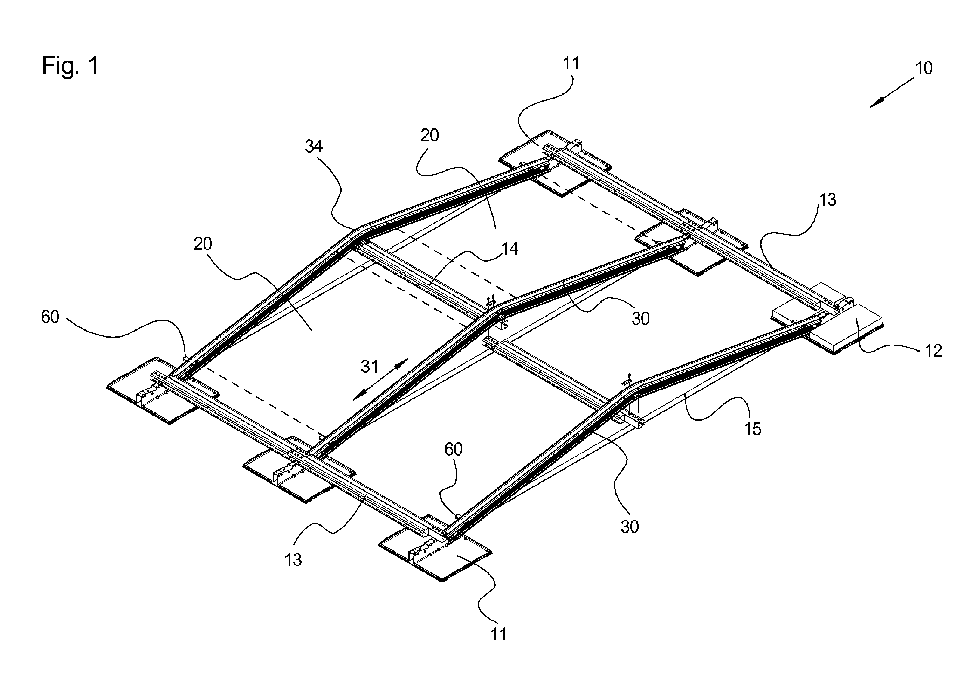

Fig. 1 zeigt eine perspektivische Ansicht einer erfindungsgemäßen Solarmodulanordnung 10. Die Solarmodulanordnung 10 liegt mit mehreren, identischen, quadratischen Fußplatten 11 lose auf einem ebenen Untergrund, beispielsweise einem Industrieflachdach, auf. Zur Erhöhung der Standsicherheit ist wenigstens ein Teil der Fußplatten 11 aus Stahlblech mit Ballastplatten 12 aus Beton beschwert.

Weiter umfasst die Solarmodulanordnung 10 mehrere parallele Tragprofile 30, die an ihren beiden Enden fest mit einer zugeordneten Fußplatte 11 verbunden sind. Die Tragprofile 30 sind aus Aluminium im Strangpressverfahren hergestellt und besitzen daher eine im Wesentlichen konstante Querschnittsform. In der Mitte sind die einstückigen Tragprofile 30 mit einer Biegung 34 versehen, so dass sich insgesamt eine spitzdachförmig geneigte Anordnung der Solarmodule 20 ergibt, wobei der Neigungswinkel beispielsweise 10° beträgt. Zur Versteifung ist zwischen den Enden eines Tragprofils 30 jeweils eine Zugstrebe 15 in Form eines Stahlprofils mit rechteckigem Querschnitt vorgesehen. Zwei benachbarte Tragprofile 30 halten jeweils zwei rechteckige, ebene Solarmodule 20, die in Fig. 1 als Strichlinie angedeutet sind. In der Nähe der Fußplatten 11 ist das erfindungsgemäße Füllteil 60 an den Tragprofilen 30 angebracht.

Quer zu den Tragprofilen 30 sind parallele, identische Längsträger 13; 14 vorgesehen, die gleichzeitig als Kabelkanal dienen. Durch die Längsträger 13; 14 werden die Tragprofile 30 auf Abstand gehalten, wobei die gesamte Solarmodulanordnung 10 gleichzeitig versteift wird. Die ersten Längsträger 13 verbinden die Fußplatten 11 fest miteinander, wobei die zweiten Längsträger 14 die Tragprofile 30 im Bereich der mittigen Biegung 34 fest miteinander verbinden.

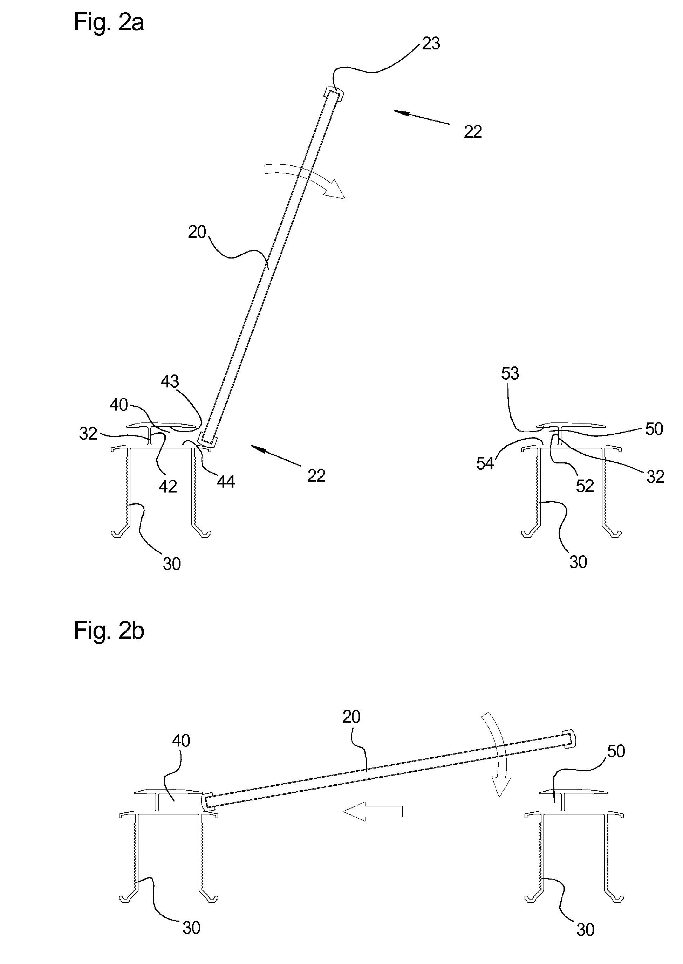

Die Fig. 2a bis 2d zeigen einen Querschnitt der Tragprofile 30 mit dem Solarmodul 20 in verschiedenen Stadien des Montagevorgangs. Das Solarmodul 20 ist in Form eines sogenannten rahmenlosen Solarmoduls ausgeführt. Es besteht aus zwei fest miteinander verbundenen Glasplatten, zwischen denen die fotovoltaischen Zellen angeordnet sind. Die fotovoltaischen Zellen können dabei im Dünnschichtverfahren unmittelbar auf eine der beiden Glasplatten aufgebracht sein. Die fotovoltaischen Zellen können aber auch auf gesonderte Siliziumsubstrate aufgebracht sein, die zwischen den beiden Glasplatten eingebaut sind. Am Rand 22 sind die Solarmodule mit einem U-förmigen Gummiprofil 23 versehen, das sich im Wesentlichen über die gesamte Seitenlänge des Solarmoduls 20 erstreckt. Durch das Gummiprofil 23 wird das Solarmodul 20 spielfrei in der zugeordneten Haltenut 40; 50 gehalten. Gleichzeitig kann es bei der Montage leichter in die Haltenut 40; 50 eingeschwenkt werden.

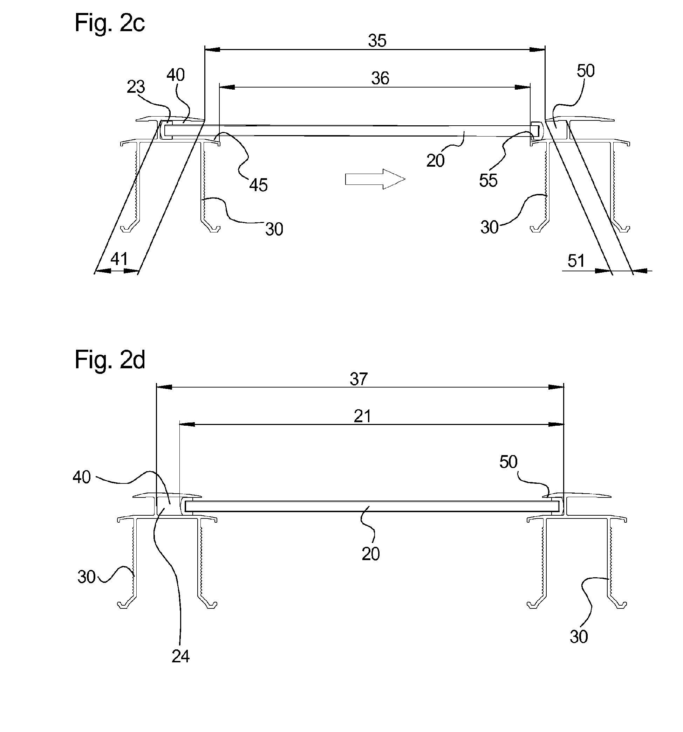

Alle Tragprofile 30 sind im Querschnitt betrachtet identisch ausgeführt, wobei jedes Tragprofil 30 zwei voneinander weg weisende Haltenuten 40; 50 aufweist. Die beiden Haltenuten 40; 50 weisen eine unterschiedliche Tiefe (Nr. 41; 51; Fig. 2c) auf, wobei deren Nutgrund an einer gemeinsamen Trennwand 32 ausgeführt ist. Die Nutflanken 43; 53; bzw. 44; 54 der beiden Haltenuten 40; 50 an einem Tragprofil 30 liegen jeweils in einer Flucht, so dass die Haltnuten 40; 50 zweier benachbarter Tragprofile 30 aufeinander zu weisen.

Fig. 2a zeigt das erste Montagestadium, in dem das Solarmodul 20 mit einem Seitenrand 22 auf die untere Nutflanke 44 der tieferen Haltenut 40 aufgesetzt wird. Die untere Nutflanke 44 ist hierfür länger ausgebildet als die obere Nutflanke 43. Beim Aufsetzen ist das Solarmodul 20 im Wesentlichen senkrecht zur Richtung der Schwerkraft ausgerichtet.

Fig. 2b zeigt das zweite Montagestadium, in dem das Solarmodul 20 im Wesentlichen in eine horizontale Lage gebracht wird, bis es fast auf dem anderen Tragprofil 30 aufliegt. Dabei wird es gegen die tiefere Haltenut 40 gedrückt, deren Mündung als Drehachse für die Kippbewegung dient.

Fig. 2c zeigt das dritte Montagestadium. Sobald das Solarmodul 20 einen genügend flachen Neigungswinkel aufweist, kann es in die tiefere Haltenut 40 eingeschoben werden. Hierbei werden die Elastizität und die Dicke des Gummiprofils 23 ausgenutzt, um die leichte Schrägstellung zu kompensieren. Der Einführvorgang wird durch die Einführschräge 45 an der unteren Nutflanke unterstützt. Sobald das Solarmodul 20 vollständig in die tiefere Haltenut 40 eingeschoben ist, kann es auf die untere Nutflanke der weniger tiefen Haltenut 50 aufgelegt werden. Diese Nutflanke ist ebenfalls länger ausgeführt als die zugeordnete obere Nutflanke. Die Breite des Freiraums 35; 36 zwischen den beiden Tragprofilen 30, der durch die Nutflanken definiert wird, ist kleiner als die Breite des Solarmoduls 21, damit das Solarmodul 20 im Weiteren nicht aus den Haltenuten 40; 50 heraus fällt.

Fig. 2d zeigt das vierte Montagestadium, in dem das Solarmodul 20 vollständig in die weniger tiefe Haltenut 50 eingeschoben ist, so dass zwischen dem Nutgrund der tieferen Haltenut 40 und dem Solarmodul 20 ein Freiraum 24 verbleibt. Dementsprechend ist der Abstand der Nutgründe 37 der beiden Haltenuten 40; 50 größer als die Breite 21 des Solarmoduls 20.

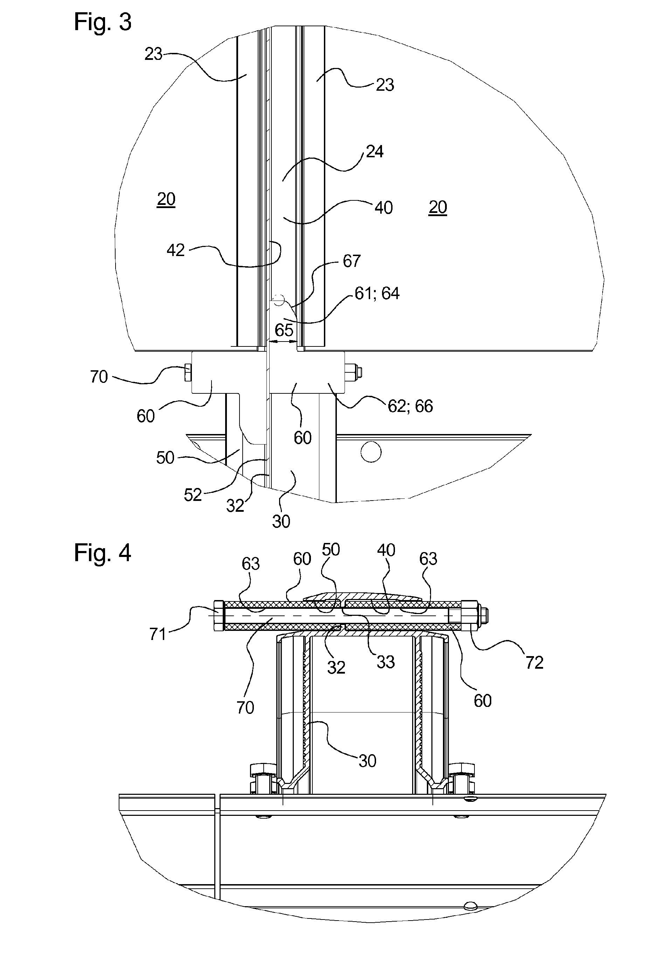

Fig. 3 zeigt eine Schnittansicht des Modulträgers 30 mit eingesetztem Solarmodul 20 und eingesetztem Füllteil 60, wobei die Schnittebene parallel zur Oberfläche des Solarmoduls 20 verläuft. Zu erkennen ist das erfindungsgemäße Füllteil 60, welches den Freiraum 24 zwischen dem Solarmodul, insbesondere dem Gummiprofil 23, und dem Nutgrund 42 der tieferen Haltenut 40 ausfüllt, so dass das Solarmodul 20 im Wesentlichen spielfrei zwischen dem Füllteil 60 und dem Nutgrund des (nicht dargestellten) gegenüberliegenden Halteprofils aufgenommen ist.

Das Füllteil 60 ist L-förmig mit einem ersten 61 und einem dazu senkrechten zweiten Schenkel 62 ausgebildet. Die Vorder- und die Rückseite des Füllteils 60 sind eben ausgeführt und verlaufen parallel zur Oberfläche des Solarmoduls, wobei deren Abstand bzw. die Dicke des Füllteils 60 der Breite der Haltenut 40 entspricht, so dass das Füllteil 60 dort im Wesentlichen spielfrei aufgenommen ist. Das Füllteil 60 besteht aus Polyamid und ist vorzugsweise im Spritzgussverfahren hergestellt. Bei kleineren Stückzahlen kann auch daran gedacht sein, das Füllteil 60 aus einem Plattenmaterial auszuschneiden.

Der erste Schenkel 61 des Füllteils 60 bildet den Füllabschnitt 64, der zwischen dem Solarmodul 20 und dem Nutgrund 42 der Haltenut 40 angeordnet ist. Der Füllabschnitt 64 ist fast über seine gesamte Länge gerade mit einer konstanten Breite 65 ausgeführt. An dem freien Ende des ersten Schenkels 61 ist eine Einführschräge 67 vorgesehen, damit der Füllabschnitt 64 leichter in den Freiraum 24 zwischen dem Solarmodul 20 und dem Nutgrund 42 eingeführt werden kann. Die Einführschräge 67 ist vorzugsweise auf der vom Nutgrund 42 der Haltenut 40 abgewandten Seite des ersten Schenkels 61 angeordnet, da nur bei dieser Anordnung die gewünschte Einführerleichterung stattfindet.

Der zweite Schenkel 62 ist ebenfalls gerade ausgeführt, wobei er über seine gesamte Länge eine konstante Breite aufweist. Der zweite Schenkel 62 dient als Anschlag für das Solarmodul 20, damit dieses nicht in Erstreckungsrichtung (Nr. 31; Fig. 1) des Tragprofils 30 entlang der Haltenut 40 verrutschen kann. Das Solarmodul 20 liegt mit einer zugeordneten Seitenfläche an dem zweiten Schenkel 62 an.

In Fig. 3 ist zu beiden Seiten der Trennwand 32 zwischen der tieferen 40 und der weniger tiefen Haltenut 50 ein Füllteil 60 angeordnet. Die beiden Füllteile 60 sind identisch ausgebildet, wobei das in Fig. 3 rechte Füllteil 60 mit seinem Füllabschnitt 64 in den Freiraum 24 zwischen dem Solarmodul 20 und dem Nutgrund 42 der tieferen Haltenut 40 eingreift. Links der Trennwand 32 in der weniger tiefen Haltenut 50 liegt das Solarmodul 20 unmittelbar an dem Nutgrund 52 der weniger tiefen Haltenut 50 an, so dass das entsprechende Füllteil 50 nur noch als Anschlag für das Solarmodul 20 dient.

Fig. 4 zeigt einen Querschnitt des Tragprofils 30, wobei die Schnittebene durch den Klemmbolzen 70 verläuft. Der Klemmbolzen 70 in Form eines Gewindebolzens mit Sechskantkopf 71 durchsetzt jeweils eine kreisrunde Bohrung 63 in den beiden Füllteilen 60. Weiter durchsetzt er eine kreisrunde Bohrung 33 in der Trennwand 32 des Tragprofils 30 zwischen den beiden Haltenuten 40; 50. Mit einer Mutter 72, welche auf den Klemmbolzen 70 aufgeschraubt ist, werden die beiden Füllteile 60 gegen die Trennwand 32 geklemmt. Gleichzeitig werden sie durch die jeweils zugeordnete Haltenut 40; 50 gegen Verdrehen gesichert.

### Bezugszeichenliste

- 10: Solarmodulanordnung
- 11: Fußplatte
- 12: Ballastplatte
- 13: erster Längsträger
- 14: zweiter Längsträger
- 15: Zug strebe

- 20: Solarmodul
- 21: Breite des Solarmoduls
- 22: Rand des Solarmoduls
- 23: Gummiprofil
- 24: Freiraum

- 30: Tragprofil
- 31: Erstreckungsrichtung
- 32: Trennwand
- 33: Bohrung der Trennwand
- 34: Biegung
- 35: Breite des Freiraums bezüglich der oberen Nutflanke
- 36: Breite des Freiraums bezüglich der unteren Nutflanke
- 37: Abstand der Nutgründe

- 40: tiefere Haltenut
- 41: Tiefe der tieferen Haltenut
- 42: Nutgrund
- 43: obere Nutflanke
- 44: untere Nutflanke
- 45: Einführschräge

- 50: weniger tiefe Haltenut
- 51: Tiefe der weniger tiefen Haltenut
- 52: Nutgrund
- 53: obere Nutflanke
- 54: untere Nutflanke
- 55: Einführschräge

- 60: Füllteil
- 61: erster Schenkel
- 62: zweiter Schenkel
- 63: Bohrung des Füllteils
- 64: Füllabschnitt
- 65: Breite des Füllabschnitts
- 66: Anschlagabschnitt
- 67: Einführschräge des Füllteils

- 70: Klemmbolzen
- 71: Sechskantkopf
- 72: Mutter

## Patentansprüche

1. Solarmodulanordnung (10) mit wenigstens einem ebenen, rechteckigen Solarmodul (20), dem zwei Tragprofile (30) zugeordnet sind, welche sich mit einer konstanten Querschnittsform parallel zu zwei gegenüberliegenden Seiten des Solarmoduls (20) erstrecken, wobei die Tragprofile (30) aufeinander zu weisende Haltenuten (40; 50) mit einem Nutgrund (42; 52) und zwei gegenüberliegenden Nutflanken (43; 44; 53; 54) aufweisen, welche das Solarmodul (20) an einem zugeordneten Seitenrand (22) halten, wobei der Abstand (37) der Nutgründe (42; 52) der einander zugeordneten Haltenuten (40; 50) größer als die Breite (21) des Solarmoduls (20) ist, wobei die einander zugeordneten Nutflanken (43; 53 bzw. 44; 54) jeweils einen Freiraum zwischen den beiden Tragprofilen (30) definieren, dessen Breite (35; 36) kleiner als die Breite (21) des Solarmoduls (20) ist,
**dadurch gekennzeichnet, dass** ein gesondertes Füllteil (60) vorgesehen ist, welches mit einem Füllabschnitt (64) zwischen dem Solarmodul (20) und dem Nutgrund (42) angeordnet ist, wobei die Breite (65) des Füllabschnitts (64) so groß ausgeführt ist, dass das Solarmodul (20) im Wesentlichen spielfrei zwischen dem Füllteil (60) und dem gegenüberliegenden Nutgrund (52) aufgenommen ist.

2. Solarmodulanordnung nach Anspruch 1,
**dadurch gekennzeichnet, dass** der Füllabschnitt (64) eine Einführschräge (67) aufweist.

3. Solarmodulanordnung nach einem der vorstehenden Ansprüche,
**dadurch gekennzeichnet, dass** das Füllteil (60) im Wesentlichen L-förmig mit einem ersten (61) und einem dazu senkrechten zweiten Schenkel (62) ausgebildet ist, wobei der erste Schenkel (61) den Füllabschnitt (64) bildet, wobei der zweite Schenkel (62) einen Anschlagabschnitt (66) für das Solarmodul gegen Verschiebung in Erstreckungsrichtung (31) des Tragprofils (30) bildet.

4. Solarmodulanordnung nach einem der vorstehenden Ansprüche,
**dadurch gekennzeichnet, dass** wenigstens zwei Solarmodule (20) vorgesehen sind, die von einem gemeinsamen Tragprofil (30) gehalten werden, welches mit zwei voneinander weg weisenden Haltenuten (40; 50) versehen ist, wobei die Nutgründe (42; 52) der beiden Haltenuten (40; 50) an einer gemeinsamen Trennwand (32) vorgesehen sind, wobei das Füllteil (60) mit einem Klemmbolzen (70) am Tragprofil (30) befestigt ist, der die Trennwand (32) und das Füllteil (60) durchsetzt.

5. Solarmodulanordnung nach Anspruch 4,
**dadurch gekennzeichnet, dass** der Klemmbolzen (70) zwei identische Füllteile (60) durchsetzt, die zu beiden Seiten der Trennwand (32) angeordnet sind.

6. Solarmodulanordnung nach Anspruch 5, rückbezogen auf Anspruch 3,
**dadurch gekennzeichnet, dass** der Füllabschnitt (64) eines der beiden Füllteile (60) nicht in Eingriff mit dem Solarmodul (20) steht.

7. Solarmodulanordnung nach einem der vorstehenden Ansprüche,
**dadurch gekennzeichnet, dass** die Tiefe (41; 51) der beiden Haltenuten, welche ein Solarmodul (20) tragen, sich um die Breite (65) des Füllabschnitts (64) des Füllteils (60) unterscheidet.

8. Solarmodulanordnung nach einem der vorstehenden Ansprüche,
**dadurch gekennzeichnet, dass** die Haltenut (40; 50) eine Einführschräge (45; 55) für das Solarmodul (20) aufweist.

9. Solarmodulanordnung nach einem der vorstehenden Ansprüche,
**dadurch gekennzeichnet, dass** das Füllteil (60) aus Kunststoff, vorzugsweise Polyamid, im Spritzgussverfahren hergestellt ist.

10. Solarmodulanordnung nach einem der vorstehenden Ansprüche,
**dadurch gekennzeichnet, dass** zwischen der Haltenut (40; 50) und dem Rand (22) des Solarmoduls (20) ein Gummiprofil (23) vorgesehen ist, welches im Querschnitt betrachtet U-förmig ausgebildet ist.
